# FASCICULE DE BREVET EUROPEEN

(11) **EP 4 311 609 B1**
(45) Date de publication et mention de la délivrance du brevet: **03.12.2025**
(21) Numéro de dépôt: 23183709.7
(22) Date de dépôt: 05.07.2023
(51) Int. Cl.: B21D 22/02, B21D 22/20, B21D 45/02, B21D 55/00, G01N 21/84, B21D 24/16, G05B 19/406

(54) **PRESSE D EMBOUTISSAGE ET PROCEDE DE DETECTION D'UN BOURRAGE DE CHUTES DE TOLE**
TIEFZIEHPRESSE UND VERFAHREN ZUM ERKENNEN EINES BLECHABFALLSTAUS
STAMPING PRESS AND METHOD FOR DETECTING A JAM OF SHEET METAL TRIMMINGS

(30) Priorité: 28.07.2022 FR 2207798
(43) Date de publication de la demande: 31.01.2024
(73) Titulaire: Stellantis Auto SAS, 78300 Poissy (FR); CTAG-Fundacion Para La Promocion de la Innovacion Investigacion y Desarrollo Techológico Industria, 36475 O Porrino, Pontevedra (ES)
(72) Inventeur: FOJO CHAOS, Ana Maria, 36214 Vigo (ES); HERRERO, Ruben, 36206 Vigo (ES); AREAL, Juan Jose, 36206 Vigo (ES); DOMINGUEZ, Alba, 27870 Xove (Lugo) (ES); FERNANDEZ GONZALEZ, Carmen, 36208 Vigo (ES)
(74) Mandataire: BCIP

(56) Documents cités:
- FR-A1- 3 021 885
- FR-A1- 3 023 193
- FR-A1- 3 052 693
- US-A1- 2016 175 911
- US-A1- 2021 394 247
- US-A1- 2022 126 345

## Description

### Domaine technique

L'invention a trait au domaine de l'emboutissage, et plus particulièrement à l'évacuation de chutes d'emboutissage.

### Technique antérieure

Une presse d'emboutissage permet notamment la fabrication de pièces de véhicules automobiles, par le découpage d'une tôle et par sa mise en forme par emboutissage. Ainsi, le découpage d'une tôle par la presse d'emboutissage permet l'obtention, d'une part, d'un flan de tôle à mesure et, d'autre part, des portions de tôle excédentaires, communément désignées par chutes. En effet, le flan de tôle découpé à mesure conduira à la fabrication de la pièce finie, alors que les chutes en excès sont coupées et évacuées en tombant le long des côtés de la matrice (ou filière) vers la fosse ou le sol de la presse d'emboutissage.

Aujourd'hui, les processus d'emboutissage sont réalisés par des presses automatisées et des robots, car leur utilisation combinée permet de réaliser le processus de manière simple et sûre, ainsi que de configurer les paramètres d'emboutissage en fonction des besoins des pièces et des tôles.

Toutefois, les presses d'emboutissage automatiques actuelles sont sujettes à un problème de bourrage causé par l'accumulation des chutes tout au long du processus de fabrication, car la taille accumulée des chutes et la pression exercée peuvent entraîner un endommagement de la matrice. En effet, les chutes s'accumulent et se pressent, au fil du temps, les unes contre les autres sous l'effet des cycles de pressage, ce qui les rend plus difficiles à retirer. De plus, cette accumulation de chutes restant dans la matrice entraîne une remontée trop importante de la tôle ou de la pièce, causant ainsi un risque de non détection de la position de travail pour le robot, ce qui provoque des arrêts de production.

Le document de brevet publié US 2016/0175911 A1 divulgue un procédé d'emboutissage d'une pièce comprenant l'enregistrement par des caméras de ladite pièce de manière à détecter et comparer des paramètres issus des images obtenus via lesdites caméras, avec des paramètres pré-enregistrés.

Cependant, bien que la solution du document US 2016/0175911 A1 vise à améliorer la qualité des pièces embouties avec une surveillance permanente du procédé d'emboutissage, elle ne permet pas de pallier le problème de bourrage des chutes.

### Exposé de l'invention

La présente invention a pour objectif de pallier au moins un des inconvénients de l'état de la technique susmentionné. Plus particulièrement, l'invention a pour objectif de proposer une solution simple, performante et économique permettant d'éviter l'accumulation des chutes tout au long du processus d'emboutissage afin d'éviter tout risque de bourrage.

À cet effet, l'invention a pour objet un procédé de contrôle d'emboutissage de tôle sur une presse d'emboutissage, avec chargement robotisé de la tôle sur la presse d'emboutissage, fermeture de ladite presse d'emboutissage avec découpe de chutes, et déchargement robotisé de ladite tôle de la presse d'emboutissage, ledit procédé comprenant les étapes :
- détection d'éventuel défaut d'évacuation des chutes ;
- émission d'une alarme en cas de détection avérée de défaut d'évacuation des chutes ;
remarquable en ce que la détection de défaut d'évacuation des chutes comprend :
- une acquisition d'images d'au moins une goulotte d'évacuation des chutes et/ou d'au moins un bac de récupération desdites chutes, sur la presse d'emboutissage ; et
- une analyse desdites images de manière à identifier l'éventuel défaut d'évacuation des chutes.

Selon un mode de réalisation, la presse d'emboutissage comprend un châssis, principal et immobile, l'acquisition des images étant réalisée via une caméra fixée audit châssis.

Selon un mode de réalisation, la presse d'emboutissage comprend un bâti inférieur, fixe, et un bâti supérieur, mobile verticalement, la caméra étant située au-dessus d'un niveau supérieur du bâti inférieur et latéralement au bâti supérieur.

Selon un mode de réalisation, l'analyse des images comprend une détermination d'au moins une zone d'intérêt correspondant à l'au moins une goulotte et/ou à l'au moins un bac.

Selon un mode de réalisation, l'acquisition d'images et/ou l'analyse des images a/ont lieu spécifiquement entre une fin de la fermeture et une fin d'ouverture successive à ladite fermeture de la presse d'emboutissage.

Selon un mode de réalisation, l'acquisition d'images entre la fin de la fermeture et la fin de l'ouverture successive de la presse d'emboutissage comprend une acquisition d'au moins deux images.

Selon un mode de réalisation, l'analyse des images conclut à un défaut d'évacuation des chutes lorsqu'une chute est détectée comme immobile dans une de l'au moins une goulotte d'évacuation.

Selon un mode de réalisation, l'analyse des images conclut à un défaut d'évacuation des chutes lorsqu'aucune chute n'est détectée dans une de l'au moins une goulotte d'évacuation entre une fin de la fermeture et une fin d'ouverture successive à ladite fermeture de la presse d'emboutissage.

L'invention concerne également une presse d'emboutissage de tôle comprenant :
- un châssis, principal et immobile ;
- un bâti inférieur, fixe avec le châssis ;
- un bâti supérieur, mobile verticalement par rapport au châssis et au bâti inférieur ;
- une unité de contrôle de mouvement du bâti supérieur, de fermeture et d'ouverture de la presse d'emboutissage ;

remarquable en ce que ladite presse d'emboutissage comprend, en outre :
   - une caméra disposée au-dessus du bâti inférieur et latéralement au bâti supérieur de manière à pouvoir acquérir des images d'une matrice de découpe de la tôle avec au moins une goulotte d'évacuation de chute(s) de ladite tôle ;
   - une unité de traitement des images ;
l'unité de contrôle, la caméra et l'unité de traitement des images étant configurées pour exécuter le procédé selon l'invention.

Selon un mode de réalisation, l'unité de traitement des images est reliée de manière opérationnelle à l'unité de contrôle de manière à arrêter la presse d'emboutissage en cas de détection de défaut d'évacuation des chutes.

Avantageusement, le procédé de contrôle d'emboutissage de tôle sur la presse d'emboutissage de la présente invention permet d'éviter l'accumulation des chutes de tôle lors du processus d'emboutissage, cela permet d'éviter tout risque de bourrage pouvant endommager la presse d'emboutissage et/ou ses composants.

L'invention permet, en outre, de sécuriser davantage la fabrication des pièces de tôle embouties, et d'assurer une meilleure maîtrise du temps et des coûts de production.

### Brève description des dessins

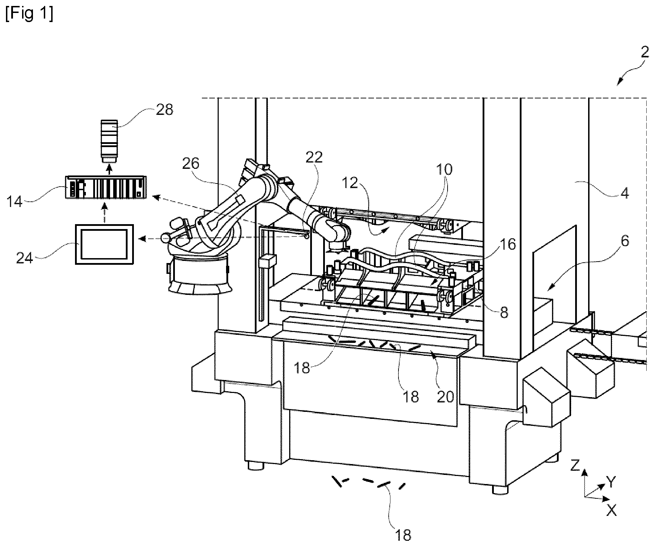

[Fig 1] représente une vue schématique en perspective d'une presse d'emboutissage de tôle configurée pour exécuter un procédé de contrôle d'emboutissage selon l'invention.

### Description détaillée

La figure 1 représente une presse d'emboutissage de tôle 2 comprenant un châssis principal fixe 4 avec un bâti inférieur 6 sur lequel est fixée une matrice de découpe 8 de tôle 10 à emboutir.

La presse 2 comprend un bâti supérieur 12 mobile verticalement (suivant l'axe Z) par rapport au châssis 4 et au bâti inférieur 6. A cet effet, on parle de fermeture ou d'ouverture de la presse d'emboutissage 2 quand le bâti supérieur 12 est, respectivement, dans une position basse ou haute par rapport au bâti inférieur 6.

Les mouvements du bâti supérieur 12 sont automatisés et gérés par une unité de contrôle 14 correspondant préférentiellement à un automate programmable industriel 14, qui sera désigné par un PLC 14 dans cette description.

Préférentiellement, la matrice de découpe 8 comprend au moins une goulotte 16 d'évacuation de chutes 18, et plus préférentiellement une multitude de goulottes 16. Par exemple, on peut voir sur la figure 1 que la matrice 8 comprend sept goulottes s'étendant sur au moins 70% d'une étendue longitudinale (suivant l'axe X) de la matrice 8, et présentant une inclinaison d'au moins 20° avec un plan horizontal.

Dans cette configuration, les chutes 18 sont aptes à être évacuées de la matrice 8 par gravité vers des bacs 20 disposés sur les deux côtés latéraux de la presse 2.

La presse 2 comprend, en outre, une caméra 22 disposée au-dessus du bâti inférieur 6 et latéralement au bâti supérieur 12. Une telle disposition de la caméra 22 lui permet d'acquérir des images de matrice 8.

Préférentiellement, la caméra 22 correspond à une caméra monochrome 2D reliée à un ordinateur 24 pouvant correspondre à une interface homme-machine, dite HMI 24.

L'ordinateur 24 correspond à une unité de traitement des images 24 comprenant de préférence un logiciel standard de traitement d'images issues des systèmes de vision. De préférence, le logiciel comprend des algorithmes de traitement fournis par HALCON^{®}.

Dans cette configuration, la communication entre la caméra 22 et l'ordinateur 24 est préférentiellement assurée par un réseau Ethernet (liaison illustrée par des flèches en pointillés) afin de permettre une transmission rapide des images capturées par la caméra 22.

Similairement, la caméra 22 est également reliée au PLC 14 via le réseau Ethernet de manière à permettre la transmission d'un signal d'identification d'une référence de la pièce en tôle 10. Avantageusement, l'identification de la référence de la pièce 10 permet d'éviter tout risque d'interférence entre au moins un robot 26 et l'acquisition des images par la caméra 22.

En effet, le processus de fabrication des pièces 10 est robotisé grâce à au moins un robot industriel 26 correspondant à un bras articulé avec un préhenseur (non représenté) permettant la dépose de la tôle 10 sur la matrice 8. La presse d'emboutissage 2 peut également comprendre un deuxième robot (non illustré) se trouvant de l'autre côté de la presse 2 et assurant l'évacuation des pièces 10 après leur emboutissage.

L'ordinateur 24 est relié de manière opérationnelle au PLC 14 afin d'arrêter la presse d'emboutissage 2 en cas de détection d'un éventuel défaut d'évacuation des chutes 18 par la caméra 22. A cet égard, la caméra 22 et l'ordinateur 24 sont configurés pour exécuter un procédé de contrôle d'emboutissage permettant de protéger la presse 2 de tout risque de bourrage pouvant être causé par les chutes 18.

Le procédé de contrôle d'emboutissage comprend une étape d'acquisition d'images d'au moins une zone d'intérêt correspondant à l'au moins une goulotte 16 et/ou à l'au moins un bac 20. Préférentiellement, chaque zone d'intérêt correspond à la goulotte 16. A cet effet, la caméra 22 est apte à capturer des images de chacune des sept goulottes 16 illustrée à la figure 1.

L'acquisition des images comprend l'analyse d'au moins deux images lors d'un cycle d'emboutissage, et précisément entre une fin de la fermeture et une fin d'ouverture successive de la presse d'emboutissage 2, le nombre d'images capturées peut aller jusqu'à 10 images.

Préférentiellement, le mouvement du robot 26 est synchronisé avec la montée et la descente du bâti supérieur 12 de la presse 2, de sorte que lorsque la presse s'ouvre, le préhenseur du robot 26 saisit la pièce 10 pour l'évacuer, et positionne par la suite une autre pièce ou tôle avant que la presse 2 ne se referme pour réaliser le cycle d'emboutissage suivant.

Dans cette configuration, le temps entre le moment où la presse 2 s'ouvre et celui où le robot 26 positionne la pièce suivante est suffisant pour capturer une multitude d'images afin d'analyser la présence des chutes 18.

A cet égard, le procédé de l'invention réalise l'analyse des images capturées par la caméra 22 lors du cycle d'emboutissage, de manière à identifier l'éventuel défaut d'évacuation des chutes 18.

L'analyse des images comprend, en premier lieu, la détermination des zones d'intérêt. A cet égard, le procédé interprète le moment de la capture d'images, puisqu'il détecte la position de la presse 2, reconnaît la référence de la pièce à analyser et s'assure que les robots 26 sont hors de la zone d'intérêts et n'interfèrent pas avec l'acquisition des images.

Dans cette configuration, la caméra 22 couvrant toutes les goulottes 16, nécessite un bon éclairage pour éviter que d'éventuelles zones sombres apparaissent dans les goulottes 16 d'évacuation ou que des zones de luminosité excessive puissent être confondues avec les chutes 18, conduisant à des résultats erronés.

Avantageusement, la caméra 22 peut être paramétrée en fonction de la matrice 8, en tenant compte de la position des différentes goulottes 16 d'évacuation. A cet égard, un réglage correct de l'orientation de la caméra 22 peut être nécessaire.

Le procédé de l'invention exécute, parallèlement à l'acquisition des images lors du cycle, l'exécution des algorithmes de traitement d'images par l'ordinateur 24.

En effet, au moment où la presse 2 s'ouvre, après avoir embouti la pièce 10, c'est le moment où les chutes 18 doivent tomber dans le bac 20 au moyen des goulottes 16. À ce stade, les images capturées dans les zones d'intérêt sont analysées et évaluées par le logiciel, afin de vérifier que les chutes 18 ont suivi un schéma/trajet de chute normal, ledit schéma normal correspond préférentiellement à une tombée progressive de la chute 18 qui peut correspondre à une apparition et à une disparition de la chute 18, respectivement, entre une première image et une dernière image capturée en fin de cycle, le logiciel vérifie également qu'aucune chute 18 n'est restée bloquée au droit d'au moins une des goulottes 16.

Avantageusement, le logiciel est capable de s'adapter au type de pièce à emboutir, car selon la référence des pièces produites, les chutes 18 peuvent tomber à des endroits différents par rapport à la matrice 8 (par une partie haute par exemple), et avec des tailles différentes selon la morphologie des pièces à emboutir.

A cet effet, le logiciel est apte à ajuster, notamment en fonction des conditions d'éclairage, les zones d'intérêt utilisées pour l'évaluation des chutes 18, car lesdites zones sont spécifiques à chaque matrice 8 (et à chaque pièce 10).

Une fois les images traitées, le logiciel conclut à un défaut d'évacuation des chutes 18, lorsqu'une chute 18 est détectée comme immobile dans une des goulottes d'évacuation 16 (apparition de la chute 18, respectivement, à la première image et à la dernière image capturée en fin de cycle par la caméra 22), et/ou lorsqu'aucune chute 18 n'est détectée dans une des goulotte 18 entre une fin de la fermeture et une fin d'ouverture de la presse 2 (aucune présence de chutes 18 entre la première image et la dernière image capturée en fin de cycle).

En cas de détermination d'une présence d'un défaut d'évacuation des chutes 18, le procédé de l'invention émettra un signal d'avertissement, préférentiellement au moyen d'une lampe de signalisation 28 et/ou d'une alarme sonore, pour signaler la un arrêt de la presse 2 afin de permettre une intervention manuelle par un opérateur ou par le robot 26 pour arrêter le bourrage et évacuer les chutes 18 concernées.

Alternativement, en cas de non-détection de défaut d'évacuation des chutes 18, un signal de bon fonctionnement peut être émis par lampe de signalisation 28.

Préférentiellement, l'ordinateur 24 comprend un écran apte à diffuser les images capturées lors des cycles d'emboutissage ainsi que la référence des pièces à emboutir, de manière à assurer une surveillance visuelle du processus.

Avantageusement, la liaison opérationnelle entre l'ordinateur 24 et le PLC 14, permet à ce dernier d'arrêter la presse d'emboutissage 2 en cas de détection de défaut d'évacuation des chutes 18, de manière à préserver la presse 2 et ses composants de tout risque d'endommagement pouvant être causé par un éventuel bourrage, améliorant ainsi la sécurité et la longévité des machines et des personnes.

## Revendications

1. Procédé de contrôle d'emboutissage de tôle (10) sur une presse d'emboutissage (2), avec chargement robotisé de la tôle (10) sur la presse d'emboutissage (2), fermeture de ladite presse d'emboutissage (2) avec découpe de chutes (18), et déchargement robotisé de ladite tôle (10) de la presse d'emboutissage (2), ledit procédé comprenant les étapes :
- détection d'éventuel défaut d'évacuation des chutes (18) ;
- émission d'une alarme en cas de détection avérée de défaut d'évacuation des chutes (18) ;
**caractérisé en ce que**
la détection de défaut d'évacuation des chutes (18) comprend :
- une acquisition d'images d'au moins une goulotte d'évacuation (16) des chutes (18) et/ou d'au moins un bac de récupération (20) desdites chutes (18), sur la presse d'emboutissage (2) ; et
- une analyse desdites images de manière à identifier l'éventuel défaut d'évacuation des chutes (18).

2. Procédé selon la revendication 1, dans lequel la presse d'emboutissage (2) comprend un châssis (4), principal et immobile, l'acquisition des images étant réalisée via une caméra (2) fixée audit châssis (4).

3. Procédé selon la revendication 2, dans lequel la presse d'emboutissage (2) comprend un bâti inférieur (6), fixe, et un bâti supérieur (12), mobile verticalement, la caméra (22) étant située au-dessus d'un niveau supérieur du bâti inférieur (6) et latéralement au bâti supérieur (12).

4. Procédé selon l'une des revendications 1 à 3, dans lequel l'analyse des images comprend une détermination d'au moins une zone d'intérêt correspondant à l'au moins une goulotte (16) et/ou à l'au moins un bac (20).

5. Procédé selon l'une des revendications 1 à 4, dans lequel l'acquisition d'images et/ou l'analyse des images a/ont lieu spécifiquement entre une fin de la fermeture et une fin d'ouverture successive à ladite fermeture de la presse d'emboutissage (2).

6. Procédé selon la revendication 5, dans lequel l'acquisition d'images entre la fin de la fermeture et la fin de l'ouverture successive de la presse d'emboutissage (2) comprend une acquisition d'au moins deux images.

7. Procédé selon l'une des revendications 1 à 6, dans lequel l'analyse des images conclut à un défaut d'évacuation des chutes (18) lorsqu'une chute est détectée comme immobile dans une de l'au moins une goulotte d'évacuation (16).

8. Procédé selon l'une des revendications 1 à 7, dans lequel l'analyse des images conclut à un défaut d'évacuation des chutes (18) lorsqu'aucune chute (18) n'est détectée dans une de l'au moins une goulotte d'évacuation (18) entre une fin de la fermeture et une fin d'ouverture successive à ladite fermeture de la presse d'emboutissage (2).

9. Presse d'emboutissage (2) de tôle (10) comprenant :
- un châssis (4), principal et immobile ;
- un bâti inférieur (6), fixe avec le châssis (4) ;
- un bâti supérieur (12), mobile verticalement par rapport au châssis (4) et au bâti inférieur (6) ;
- une unité de contrôle (14) de mouvement du bâti supérieur (12), de fermeture et d'ouverture de la presse d'emboutissage (2) ;
**caractérisé en ce que** ladite presse d'emboutissage (2) comprend, en outre :
- une caméra (22) disposée au-dessus du bâti inférieur (6) et latéralement au bâti supérieur (12) de manière à pouvoir acquérir des images d'une matrice (8) de découpe de la tôle (10) avec au moins une goulotte d'évacuation (16) de chute(s) (18) de ladite tôle (10) ;
- une unité de traitement (24) des images ;
l'unité de contrôle (14), la caméra (22) et l'unité de traitement (24) des images étant configurées pour exécuter le procédé selon l'une des revendications 1 à 8.

10. Presse d'emboutissage (2) selon la revendication 9, dans laquelle l'unité de traitement (24) des images est reliée de manière opérationnelle à l'unité de contrôle (14) de manière à arrêter la presse d'emboutissage (2) en cas de détection de défaut d'évacuation des chutes (18).

## Patentansprüche

1. Verfahren zur Steuerung des Blechziehens (10) an einer Tiefziehpresse (2), mit robotisierter Beladung des Blechs (10) an der Tiefziehpresse (2), Schließen der Tiefziehpresse (2) mit Ausschneiden von Stürzen (18) und robotisiertes Entladen des Blechs (10) von der Tiefziehpresse (2), wobei das Verfahren die folgenden Schritte umfasst:
- Erkennung möglicher Absturzdefekte (18);
- Alarm bei nachgewiesener Erkennung von Sturzfluchtfehlern (18);
**dadurch gekennzeichnet, dass**
Die Erkennung eines Fehlers bei der Sturzevakuierung (18) umfasst:
- Aufnahme von Bildern von mindestens einem Abflusskanal (16) der Stürze (18) und/oder von mindestens einem Auffangbehälter (20) der Stürze (18) auf der Tiefziehpresse (2) und
- eine Analyse dieser Bilder, um etwaige Fehler bei der Evakuierung von Stürzen zu identifizieren (18).

2. Verfahren nach Anspruch 1, bei dem die Tiefziehpresse (2) einen Hauptrahmen (4) aufweist, der stationär ist, wobei die Bildaufnahme über eine Kamera (2) erfolgt, die an dem Rahmen (4) befestigt ist.

3. Verfahren nach Anspruch 2, bei dem die Tiefziehpresse (2) einen festen unteren Rahmen (6) und einen vertikal beweglichen oberen Rahmen (12) aufweist, wobei die Kamera (22) oberhalb einer oberen Ebene des unteren Rahmens (6) und seitlich zum oberen Rahmen (12) angeordnet ist.

4. Verfahren nach einem der Ansprüche 1 bis 3, wobei das Analysieren der Bilder das Bestimmen mindestens eines Bereichs von Interesse umfasst, der dem mindestens einen Schacht (16) und/oder dem mindestens einen Behälter (20) entspricht.

5. Verfahren nach einem der Ansprüche 1 bis 4, bei dem die Bilderfassung und/oder die Bildanalyse speziell zwischen einem Ende des Schließens und einem Ende des Öffnens, das auf das Schließen der Tiefziehpresse (2) folgt, stattfindet.

6. Verfahren nach Anspruch 5, wobei das Erfassen von Bildern zwischen dem Ende des Schließens und dem Ende des aufeinander folgenden Öffnens der Tiefziehpresse (2) das Erfassen von mindestens zwei Bildern umfasst.

7. Verfahren nach einem der Ansprüche 1 bis 6, bei dem die Analyse der Bilder zu einem Fehler bei der Evakuierung der Stürze (18) führt, wenn ein Sturz als unbeweglich in einem der mindestens einen Evakuierungsrinne (16) erfasst wird.

8. Verfahren nach einem der Ansprüche 1 bis 7, bei dem die Analyse der Bilder zu einem Fehler bei der Evakuierung der Stürze (18) führt, wenn kein Sturz (18) in einem der mindestens einen Evakuierungsrinne (18) zwischen einem Ende des Schließens und einem Ende des Öffnens, das auf das Schließen der Tiefziehpresse (2) folgt, festgestellt wird.

9. Stanzpresse (2) für Blech (10) mit:
- ein Hauptrahmen (4), das unbeweglich ist;
- ein unteres Gestell (6), das mit dem Gestell (4) fest verbunden ist;
- ein oberes Gestell (12), das in Bezug auf das Gestell (4) und das untere Gestell (6) vertikal beweglich ist;
- eine Steuereinheit (14) für die Bewegung des oberen Rahmens (12), das Schließen und Öffnen der Tiefziehpresse (2);
Die Tiefziehpresse (2) umfasst außerdem:
- eine Kamera (22), die oberhalb des unteren Rahmens (6) und seitlich des oberen Rahmens (12) angeordnet ist, sodass Bilder einer Schneidmatrix (8) des Blechs (10) mit mindestens einer Abflussrinne (16) für das Abfallen (18) des Blechs (10) aufgenommen werden können;
- eine Bildverarbeitungseinheit (24);
Die Steuereinheit (14), die Kamera (22) und die Bildverarbeitungseinheit (24) sind so konfiguriert, dass sie das Verfahren nach einem der Ansprüche 1 bis 8 ausführen.

10. Tiefziehpresse (2) nach Anspruch 9, wobei die Bildverarbeitungseinheit (24) mit der Steuereinheit (14) betriebsmäßig verbunden ist, um die Tiefziehpresse (2) im Falle einer Erfassung eines Fehlers der Ableitung der Stürze (18) anzuhalten.

## Claims

1. Method for checking the stamping of sheet metal (10) on a stamping press (2), with robotized load of the sheet metal (10) on the stamping press (2), closure of said stamping press (2) with cut-out (18), and robotized unloading of said sheet metal (10) on the stamping press (2), said method comprising the steps of:
- detection of a possible fall escape defect (18);
- issuing an alarm in the event of a proven detection of a fall evacuation defect (18);
**characterised by**
fall escape defect detection (18) includes:
- acquisition of images of at least one discharge chute (16) for the falls (18) and/or at least one recovery tank (20) for said falls (18), on the stamping press (2); and
- an analysis of these images in order to identify the possible defect of evacuation of the falls (18).

2. Method according to claim 1, in which the stamping press (2) comprises a main and stationary frame (4), the acquisition of the images being realised via a camera (2) fixed to said frame (4).

3. Method according to claim 2, in which the stamping press (2) comprises a stationary lower frame (6) and a vertically movable upper frame (12), the camera (22) being located above an upper level of the lower frame (6) and laterally to the upper frame (12).

4. Method according to one of Claims 1 to 3, in which the analysis of the images comprises a determination of at least one zone of interest corresponding to the at least one chute (16) and/or to the at least one tray (20).

5. Process according to one of Claims 1 to 4, in which the acquisition of images and/or the analysis of the a/a images take location specifically between an end of the closure and an end of opening successive to the said closure of the stamping press (2).

6. Method according to claim 5, in which the acquisition of images between the end of the closure and the end of the successive opening of the stamping press (2) comprises an acquisition of at least two images.

7. Method according to one of Claims 1 to 6, in which the analysis of the images concludes with a defect for evacuating the falls (18) when a fall is detected as immobile in one of the at least one evacuation chute (16).

8. Method according to one of Claims 1 to 7, in which the analysis of the images concludes with a defect for evacuating the scraps (18) when no scraps (18) are detected in one of the at least one evacuation chute (18) between an end of the closure and an end of opening successive to said closure of the stamping press (2).

9. Sheet metal (10) stamping press (2) comprising:
- a chassis (4), main and stationary;
- a lower frame (6), fixed with the frame (4);
- an upper frame (12), movable vertically by report to the frame (4) and to the lower frame (6);
- a unit (14) for controlling the movement of the upper frame (12), closing and opening the stamping press (2);
wherein the stamping press (2) further comprises:
a camera (22) arranged above the lower frame (6) and laterally to the upper frame (12) so as to be able to acquire images of a die (8) for cutting the sheet (10) with at least one discharge chute (16) for dropping (18) said sheet (10);
- a processing unit (24) of the images;
the control unit (14), the camera (22) and the image processing unit (24) being configured to execute the method according to one of claims 1 to 8.

10. stamping press (2) according to Claim 9, in which the image processing unit (24) is operatively connected to the control unit (14) so as to stop the stamping press (2) in the event of detection of a defect for evacuating the falls (18).
